# EUROPEAN PATENT SPECIFICATION

(11) **EP 1 961 624 B1**
(45) Date of publication and mention of the grant of the patent: **28.10.2009**
(21) Application number: 07003752.8
(22) Date of filing: 23.02.2007
(51) Int. Cl.: B60R 21/015

(54) **Airbag activation and deactivation system**
Airbagaktivierungs- und -deaktivierungssystem
Système d'activation et de désactivation d'airbag

(43) Date of publication of application: 27.08.2008
(73) Proprietor: GM Global Technology Operations, Inc., Detroit, MI 48265-3000 (US)
(72) Inventor: Lindberg, Jörgen, 46165 Trollhättan (SE)
(74) Representative: Daniel, Ulrich W.P.

(56) References cited:
- DE-A1- 4 410 402
- DE-A1- 19 918 353
- DE-A1-102004 022 896
- US-A- 5 890 085
- US-A- 6 007 093
- US-A1- 2003 033 065

## Description

The present invention refers to the field of automotive technology, more specifically to assistant functions giving support to the driver of a car and making transport of people safer and more comfortable.

Modern cars offer lots of features to the passengers that help to avoid inconveniences and dangerous situations and generally make the transport more comfortable. Some of these features like the safety belt in some countries have already become an obligation. Airbags for protecting passengers in the driver's seat and the passenger seats, especially in the front passenger seat have also become common to protect passengers in the case of a crash.

The growing diversity of safety and comfort features in a car together with the growing complexity of traffic make it more and more difficult for the driver to make sure that all the features in a car are used in an appropriate manner for the current situation.

Therefore assistant functions have been introduced that support the driver steering the car in special situations like for example a lane departure system or a parking assistant. Also a belt buckle reminder system is common to remind the passenger of a car and the driver if a safety belt has not been put on appropriately.

Most of the assistant systems have in common that they do not take the responsibility for steering the car or activating/deactivating important safety features of the car as this is a question of liability and reliability and it is accepted as a condition that the driver should have the final responsibility for the car.

In the field of the use of airbags it has emerged that an airbag can be very helpful in the case of a crash for an adult person sitting in the respective seat, but that an airbag is not always helpful for someone or something different from an adult person occupying a passenger seat like for example a child, an installed child's seat or an animal. In some cases, airbags in the case of crashes have lead to serious injuries because they have not been appropriate to protect a child on a seat or a child's seat installed in a passenger seat.

Therefore, in the case that a small child or a child's seat is occupying a passenger seat, it may make sense to deactivate the respective airbag or to activate a different airbag. Systems have become known from prior art that assist in deciding if certain safety features in a car should be switched on or off. Therefore, sensors are used that automatically check if for example a child's seat is installed.

From DE 19918353 it is for example known to combine a belt buckle sensor for the back passenger seats of a car with an automatic door locking system to protect children from opening the back doors of a car.

Also from DE 19803682 a sensor for sensing the installation of a child's seat has become known.

From DE4410402, with discloses the preamble of claim 1, it is known to provide one or more sensors detecting the presence of a child seat where the sensors can be metal sensors sensing a metal plate in the child seat or any other sensor. When the presence of a child seat is registered, the respective air bag is switched off or a warning signal is given in order to have the driver check if the airbag has to be switched off.

US5890085 teaches the combination (fusion) of results from at least two sensors to check if a car seat is occupied in a manner that no airbag ignition should be initiated. The sensors may be chosen from the group of crash sensor, pyrotechnic, ultrasonic, acoustic and pressure sensor.

US2003/0033065 teaches a weight sensor for the control of an air bag where the weight sensor measures the weight of a person sitting down and continues or repeats the measurement after a certain period of time when the effect of the first "sitting down" movement has been eliminated. So, the dynamic results of measurements of a single sensor are being taken into consideration.

However, a reliable assistant function to avoid the ignition of an airbag during a crash if said airbag is not appropriate for the situation has not yet been offered.

It is therefore one goal of the invention to create a convenient assistant function and an airbag activation or deactivation system to give support to the driver of a car to avoid inappropriate use of the airbags of a car.

The goal mentioned above has been achieved by the features of the present claim 1 of the invention.

It is commonly accepted that in the case of a child's seat installed in the passenger seat it is safer for a crash situation to deactivate the respective passenger seat airbag. Therefore the use of key switches to deactivate said airbags has become known. Also fully automatic systems have been proposed, but they are not yet 100% reliable. The present invention therefore is based upon the principle, that the final decision to activate or deactivate said airbag is up to the driver and that the best support can be given to the driver in offering a comfortable reminder function to the driver.

Such a reminder function is perceived and accepted in the best way by the driver if the information given to the driver is as far as possible adapted to the current situation, i. e. the system should at least dispose of reliable information about the occupation situation of the passenger seats. Therefore, at least two sensors are installed, said sensors sending information to a steering unit of an airbag activation and deactivation system for a passenger seat airbag in a vehicle. The timing of signals from said sensors is checked as a condition for the passenger seat being occupied by someone or something different from an adult person. If conditions are met for occupation of a passenger seat by someone or something different from an adult person said steering unit activates a signal unit to send out a signal to the driver of the vehicle to check if that passenger seat is occupied by someone or something different from an adult person, to check if the respective airbag has to be deactivated and to activate or deactivate said passenger seat airbag by a deactivation device if necessary.

The same holds (that is: a signal is sent out to the driver to check the conditions) if an adult person is perceived in a seat and the respective airbag has been deactivated before.

The reminder system for activation and deactivation of an airbag provides credibility and comfort to the driver by providing reliable information about the present occupation situation concerning the passenger seats. Therefore the driver is prepared to pay attention to the signals that are given by the signal unit and to check if the recommendation of the airbag activation and deactivation system is appropriate.

The signal unit can for example be realised as indication lights, as a screen in the dashboard or as an acoustical signal for example an indication by a recorded human or artificial voice.

The deactivation device for an airbag can appropriately be realised as a push button switch or a key switch for confirmation of an activity recommended by the system.

The steering unit will usually be realised by an electronic circuit containing a microprocessor or microcontroler and respective i/o-ports.

The functions of the airbag activation and deactivation system can be integrated in a comprehensive computer system of the car.

Said at least two sensors can be chosen to be a door switch, an ignition key switch, a belt buckle switch, a child's seat installation switch, a seat occupation sensor or a passenger airbag disconnection switch or a combination of two or more sensors of one or more of the types mentioned above.

For example a door switch can give information about opening/closing of a car door. Therefore, if an airbag has been deactivated, and the car is stopped without opening the doors and restarted again, it is most probable, that nothing has changed with the occupation of the passenger seat and so, the passenger seat airbag can be kept deactivated.

The same holds, if the belt buckle switch has not been activated. This also is an indicator that the situation remains unchanged and the respective airbag should be kept activated or deactivated as before. If on the other hand a door switch gives the information that a car door has been opened and a belt buckle switch indicates that after closing the car door a belt has been put on, it is for sure that the situation has changed and additional sensors can be checked to give more information about what exactly happened. For example, if the seat occupation sensor shows that the weight on the passenger seat has not changed significantly, it is an indication that someone or something different from an adult person has taken or left said passenger seat.

Also the passenger airbag disconnection switch has to be checked to decide if activation or deactivation of said passenger airbag has to be recommended.

The advantageous concept of the invention comprises that the timing of signals from one or more sensors is checked as a condition for the passenger seat being occupied by someone or something different from an adult person. So, a high reliability of the analysis can be achieved.

It can also be an advantageous realisation if the sequence of signals from one or more sensors is checked as a condition of the passenger seat being occupied by someone or something different from an adult person.

For example, if it is registered by a door sensor that the car door has been opened and a belt buckle sensor after reclosing the door shows that the belt buckle is closed shortly after closing the door, it is probable that an adult person has taken the passenger seat and quickly put on the safety belt, whereas installation of a child's seat takes more time and in this case usually the belt buckle is closed before reclosing the car door.

In another case, when for example the door switch shows that the car door has been opened and reclosed while the belt buckle has remained closed, it is most probable, that a child's seat has remained installed and a child has been laid into the child's seat between opening and reclosing the car door.

It can also be checked if the driver door is being opened while the passenger door is open or if the driver enters the car after closing the passenger door. In most cases the driver installs the child's seat or lays a child into a child's seat himself/herself and therefore enters the car after having closed the passenger doors and after having installed all necessary features and fixed the safety belt for the children and/or the child's seat.

Also, a seat occupation sensor can be used to gather additional information about occupation of a passenger seat. Such a seat occupation sensor can give information about if someone or something is on the passenger seat and it can also provide information about the weight of the object/person in the seat. Therefore, certain weight limits can be defined, that indicate if an adult person has taken the passenger seat, e. g. if the weight is over 50 kg. This information can also be combined with the information from a belt buckle sensor indicating if the safety belt has been put on.

Apart from a airbag activation and deactivation system the present invention also refers to a steering process for activating a signal unit to send out a signal to the driver of a vehicle to check if a passenger seat is occupied by someone or something different from an adult person, to check if the passenger seat airbag has to be deactivated and to activate or deactivate said passenger seat airbag by a deactivation device if necessary,
wherein the steering process comprises the steps of gathering information from two sensors, comparing the information, the timing and/or sequence of information with prestored schemes and activating said signal unit if the information fits at least to one of the prestored schemes.

The steering unit therefore can contain a storage device, where different schemes of sensor activities can be stored. A comparison unit can then compare information gathered from the sensors with the prestored schemes and if the present information gathered is similar to one of the prestored schemes, a respective recommendation can be given.

Generally, if no specific information can be provided by the steering process and by the airbag activation and deactivation system, a general recommendation to check the situation and to check the deactivation or activation status of the passenger seat airbags can be given.

The invention is as a matter of example shown in a drawing and explained with reference to the figures.

Herein
- fig. 1: gives a schematic view of a car with different sensors;
- fig. 2: shows a schematic view of the steering unit and prestored schemes for the arriving conclusions;
- fig. 3: shows a signal unit and
- fig. 4: shows a schematic flowchart of the steering process.

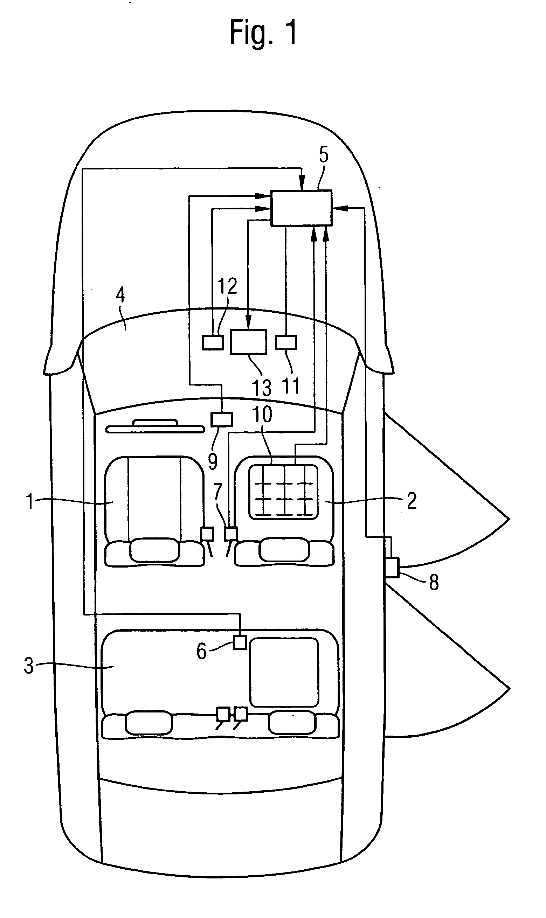

Figure 1 shows a schematic view of a car with front seats 1, 2, a back seat 3, a dashboard 4, a number of hardware sensors explained below and a steering unit 5.

In modern cars today sensors for safety and comfort are commonly used, for example belt buckle switches 6, 7, door switches 8, ignition key switches 9, a seat occupation sensor 10 and so on. The present invention uses existing hardware to realize safety functions by analysing incoming sensor information in the steering unit 5.

Figure 1 shows the sensors mentioned above being connected to a steering unit 5 by wires, a bus connection, which might be electrical or optical or a radio connection.

Also, an airbag device 11 is connected with the steering unit to provide information about the status of activation/deactivation of said airbag.

A push button 12 is provided to allow for the driver to activate/deactivate said airbag.

There is also provided a signal unit 13 for communication with the driver. If the signal unit 13 gets the respective information from the steering unit 5, the driver is reminded to check the status of seat occupation in the car and to activate/deactivate the airbag devices if necessary.

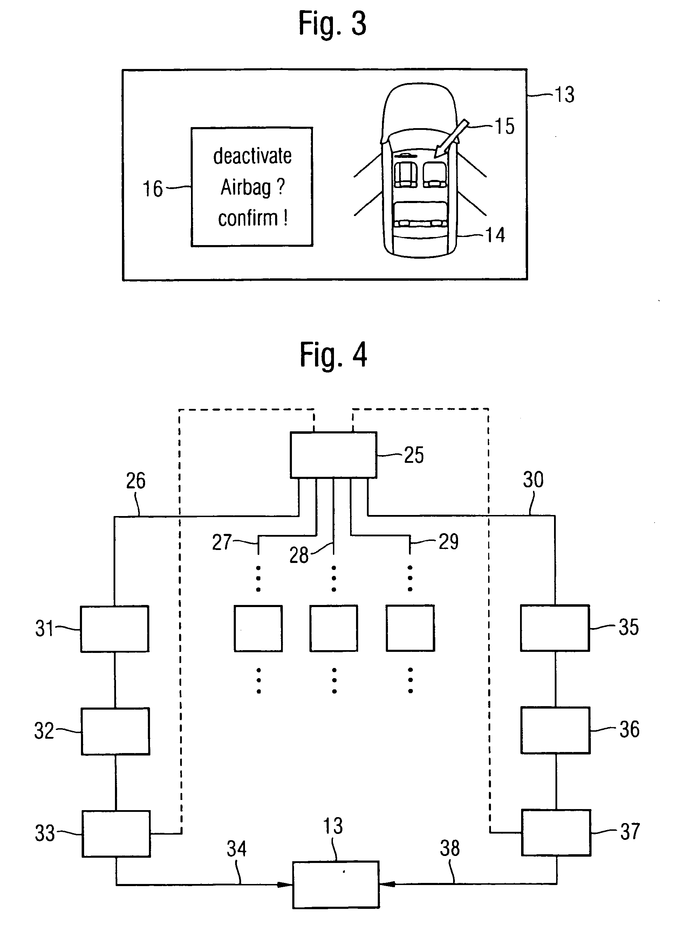

Figure 3 shows said signal unit in more detail. The signal unit can be realized by a screen showing a schematic view 14 of a car with an arrow symbol 15 indicating one of the passenger's seats that should be checked by the driver because the steering unit has come to the conclusion that said passenger seat might be occupied by something or someone different from an adult person or that the driver should at least check said seat for the occupation situation and the status of the respective air bag.

Additionally the signal unit 13 provides for a display 16 for displaying ASCII-text. For the display 16, a number of standard messages can be prestored from which the appropriate message for a given situation can be selected.

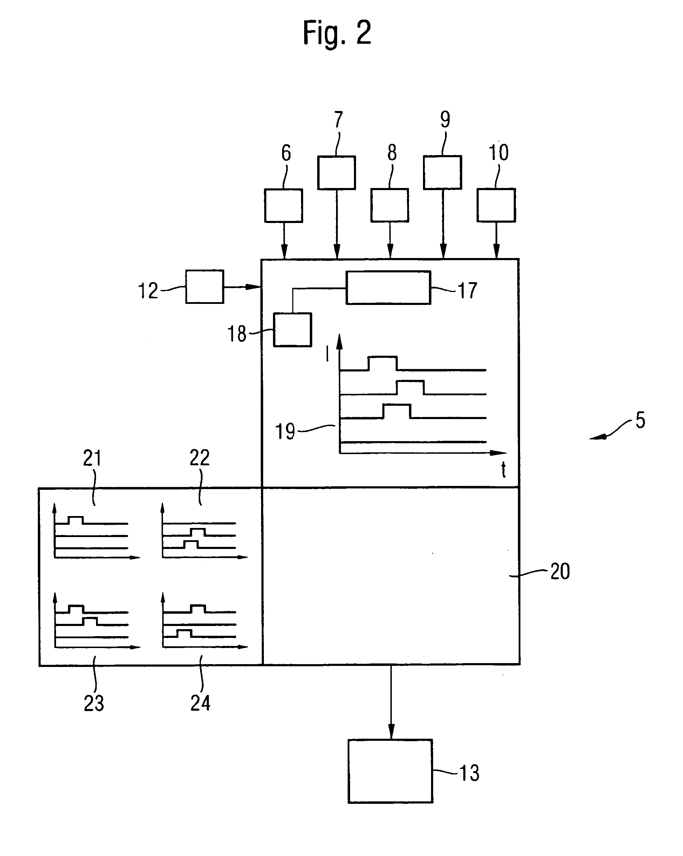

Figure 2 shows in more detail the structure of the steering unit 5.

Figure 2 shows the steering unit 5 connected to sensors 6 (rear passenger's seat belt buckle switch), 7 (front passenger's seat belt buckle switch), 8 ( door switch), 9 (ignition key switch), 10 (seat occupation weight sensor) .

The steering unit 5 is also connected to an airbag activation/deactivation pushbutton 12 and has an output connection to the signal unit 13.

The steering unit 5 comprises a microprocessor unit 17, that receives information from said sensors and the push button 12 and that is connected to a clock unit 18. The microprocessor 17 measures signals coming in from the sensors 6, 7, 8, 9, 10 with respective time information from said clock unit 18 and creates a time diagram 19 showing a timing and sequence of incoming signals from the sensors 6, 7, 8, 9, 10 or from a selection of these sensors.

The diagram created by the microprocessor 17 is compared in the comparison unit 20 with prestored schemes 21, 22, 23, 24, each of the prestored schemes representing a class of standard cases of behaviour of the users of a car.

For example, scheme 21 may represent the typical situation that the belt buckle switch of the front passenger's seat 2 is closed indicating that the safety belt is put on. Then the door switch indicates that the passenger front door is being opened and closed again without opening the safety belt.

This may indicate that a child's seat is installed in the front passenger's seat and that an adult person has either laid down a child into a child's seat or taken the child from said child's seat.

In both cases, being most probable that no adult person is sitting in the front passenger's seat, the signal unit 13 should remind the driver of the car to check the situation in the front passenger's seat if the airbag of the front passenger's seat is activated.

Therefore, the diagram 19 registered by the microprocessor 17 is being compared with the prestored schemes 21, 22, 23, 24 if at least a similarity between two diagrams can be found.

To identify similar diagrams, certain diversions in the timing of signals can be acceptable as for example the time for opening and reclosing the car door will not precisely be the same for different persons or different situations.

Figure 4 shows an example for a schematic flowchart of a process where a certain timing and/or sequence of signals registered from the sensors 6, 7, 8, 9, 10 is being checked. The first step 25 is to check the I/o-port for incoming signals from said sensors. If a signal comes in from one of the sensors or a continuous signal from on of the sensor has changed, one of the checking processes 26, 27, 28, 29, 30 is chosen dependant on said sensor.

For example, if a signal from a door sensor 8 shows that the passenger's front door is being opened, checking process 26 is chosen. Then in a step 31 it is checked, if the belt buckle switch 7 is already closed. If this is the case and the door switch 8 indicates in a further step 32 a closing of the door, then in a step 33 the conclusion is drawn that a child's seat is installed in the front passenger seat and that the respective airbag should be deactivated and nothing should change with regard to this status. Then, the process jumps back to the initial step 25.

If it is found that the belt buckle switch 7 is not closed in the step 31, the reclosing of the door with the respective signal from the door switch 8 should lead to the conclusion 34, that a signal should be given to the signal unit 13 to remind the driver to check the status of the belt buckle and the airbag and push the button 12 if necessary.

If alternatively the ignition switch 9 is closed showing that the driver starts the car, check process 30 can be started checking in a first step 35 if the doors are closed and if this is the case, checking in a second step 36 if the sensor 10 shows a considerable weight on the passenger's front seat. If this is the case, for example if a weight of over 50 kg is being perceived, the belt buckle switch 7 can be checked and additionally in a third step 37, the airbag device 11 can be checked if the front passenger seat airbag is activated. If this is the case, the process can jump back to the initial step 25. If this is not the case, the check process comes to the conclusion 38 to give a signal to the signal unit 13 reminding the driver that he should check the occupation status of the front passenger's seat 2 and to activate the respective airbag if necessary by the push button 12.

The two schemes described above give only examples for a typical behaviour of the users of a car. Additional behaviour schemes can be stored in the steering unit 5 to allow for reminding the driver to check the airbag situation in typical cases.

The invention can thereby support the driver to assure a high level of safety in the car.

Additionally, typical behaviour schemes can be stored by the representation of respective signals and signal sequences perceived by the sensors 6, 7, 8, 9, 10 and can be stored in the steering unit to be analysed later. Thereby, additional cases can be derived where the driver should be reminded to activate/deactivate certain airbags in the car.

Thereby, a learning system can be provided.

### Indices

- 1, 2: front seats
- 3: back seat
- 4: dashboard
- 5: steering unit
- 6, 7: belt buckle switches
- 8: door switches
- 9: ignition key switches
- 10: seat occupation sensor
- 11: airbag device
- 12: push button
- 13: signal unit
- 14: schematic view
- 15: arrow symbol
- 16: display
- 17: microprocessor unit
- 18: clock unit
- 19: time diagram
- 20: comparison unit
- 21, 22, 23, 24: prestored schemes
- 25: first step
- 26, 27, 28, 29, 30: Checking processes
- 31: process step
- 32: process step
- 33: process step
- 34: conclusion
- 35: process step
- 36: process step
- 37: process step
- 38: conclusion

## Claims

1. Airbag activation and deactivation system for a passenger seat (2, 3) airbag in a vehicle with a steering unit (5), a sensor (6, 7, 8, 9, 10, 11) sending information to said steering unit (5) and a deactivation device (12) for said passenger seat airbag wherein if conditions are met for occupation of said passenger seat (2, 3) by someone or something different from an adult person, said steering unit (5) activates a signal unit (13) to send out a signal to the driver of a vehicle to check if said passenger seat (2, 3) is occupied by someone or something different from an adult person, to check if the passenger seat airbag has to be deactivated and to activate or deactivate said passenger seat airbag by said deactivation device (12) if necessary.
**characterized in,**
**that** at least two sensors are chosen from the group of the following sensors:
door switch (8)
ignition key switch (9)
belt buckle switch (6, 7)
child's seat installation switch
seat occupation sensor (10)
passenger airbag disconnection switch (11)and that the timing of signals from said sensors (6, 7, 8, 9, 10, 11) is checked as a condition for the passenger seat (2, 3) being occupied by someone or something different from an adult person.

2. Airbag system according to claim 1,
**characterized in,**
**that** the sequence of signals from one or more sensors (6, 7, 8, 9, 10, 11) is checked as a condition for the passenger seat being occupied by someone or something different from an adult person.

3. Airbag system according to claim 2,
**characterized in,**
**that** at least two different sensors (6, 7, 8, 9, 10, 11) are connected to said steering unit (5).

4. Airbag system according to claim 3,
**characterized in,**
**that** at least a door sensor (8) and a belt buckle sensor (6, 7) is connected to said steering unit (5).

5. Airbag system according to claim 3,
**characterized in,**
**that** at least a door sensor (8) and a seat occupation sensor (10) is connected to the steering unit (5).

6. Airbag system according to claim 5,
**characterized in,**
**that** additionally a belt buckle sensor (6, 7) is connected to the steering unit (5).

7. Steering process for activating a signal unit to send out a signal to the driver of a vehicle to check if a passenger seat (2, 3) is occupied by someone or something different from an adult person and to check if the passenger seat airbag has to be deactivated and to activate or deactivate said passenger seat airbag by a deactivation device (12) if necessary, wherein the steering process comprises the steps of gathering information from at least two sensors (6, 7, 8, 9, 10, 11), comparing the timing and/or sequence of information with prestored schemes (21, 22, 23, 24) and activating said signal unit (13) if the information fits at least to one of those prestored schemes.

## Patentansprüche

1. Airbagaktivierungs- und Deaktivierungssystem für einen Passagiersitz-(2, 3)-Airbag in einem Fahrzeug mit einer Steuereinheit (5), einem Sensor (6, 7, 8, 9, 10, 11), der Informationen an die Steuereinheit (5) sendet, und einer Deaktivierungsvorrichtung (12) für den Passagiersitz-Airbag, wobei wenn die Bedingungen für die Besetzung des Passagiersitzes (2, 3) durch jemand anderen oder etwas anderes als eine erwachsene Person erfüllt werden, die Steuereinheit (5) eine Signaleinheit (13) aktiviert, ein Signal an den Fahrer eines Fahrzeugs zu senden, damit dieser prüfe, ob der Passagiersitz (2, 3) von jemand oder etwas anderem als einer erwachsenen Person besetzt ist, und ferner prüfe, ob der Passagiersitz-Airbag deaktiviert werden muss, und damit der Fahrer den Passagiersitz-Airbag mit Hilfe der Deaktivierungsvorrichtung (12) bei Bedarf aktiviert oder deaktiviert,
**dadurch gekennzeichnet, dass**
mindestens zwei Sensoren aus der Gruppe der folgenden Sensoren ausgewählt werden:
Türschalter (8)
Zündschlüsselschalter (9)
Gurtschlossschalter (6, 7)
Kindersitz-Einbauschalter
Sitzbelegungssensor (10)
Passagier-Airbag-Trennschalter (11), und **dadurch**,
dass die Zeitgebung der Signale von den Sensoren (6, 7, 8, 9, 10, 11) als Bedingung dafür geprüft wird, ob der Passagiersitz (2, 3) von jemand oder etwas anderem als einer erwachsenen Person besetzt ist.

2. Airbag-System gemäß Anspruch 1,
**dadurch gekennzeichnet, dass**
die Sequenz der Signale von einem oder mehreren Sensoren (6, 7, 8, 9, 10, 11) als Bedingung dafür geprüft wird, ob der Passagiersitz von jemand oder etwas anderem als einer erwachsenen Person besetzt ist.

3. Airbag-System gemäß Anspruch 2,
**dadurch gekennzeichnet, dass**
mindestens zwei unterschiedliche Sensoren (6, 7, 8, 9, 20, 11) mit der Steuereinheit (5) verbunden sind.

4. Airbag-System gemäß Anspruch 3,
**dadurch gekennzeichnet, dass**
mindestens ein Türsensor (8) und ein Gurtschlosssensor (6, 7) mit der Steuereinheit (5) verbunden sind.

5. Airbag-System gemäß Anspruch 3,
**dadurch gekennzeichnet, dass**
mindestens ein Türsensor (8) und ein Sitzbelegungssensor (10) mit der Steuereinheit (5) verbunden ist.

6. Airbag-System gemäß Anspruch 5,
**dadurch gekennzeichnet, dass**
zusätzlich ein Gurtschlosssensor (6, 7) mit der Steuerungseinheit (5) verbunden ist.

7. Steuerungsverfahren zur Aktivierung einer Signaleinheit zum Versenden eines Signals an den Fahrer eines Fahrzeugs, um zu prüfen, ob ein Passagiersitz (2, 3) von jemand oder etwas anderem besetzt ist als einer erwachsenen Person, und um zu prüfen, ob der Passagiersitz-Airbag deaktiviert werden muss, und um den Passagiersitz-Airbag gegebenenfalls mit Hilfe einer Deaktivierungsvorrichtung (12) zu aktivieren bzw. zu deaktivieren, wobei das Steuerungsverfahren die Schritte der Aufnahme von Informationen von mindestens zwei Sensoren (6, 7, 8, 9, 10, 11), des Vergleichens der Zeitgebung und/oder der Abfolge der Informationen mit gespeicherten Schemata (21, 22, 23, 24) und der Aktivierung der Signaleinheit (13), wenn die Informationen mindestens einem der gespeicherten Schemata entsprechen, umfasst.

## Revendications

1. Système d'activation et de désactivation d'airbag pour l'airbag d'un siège passager (2, 3) dans un véhicule avec une unité de direction (5), un capteur (6, 7, 8, 9, 10, 11) envoyant des informations à ladite unité de direction (5) et un système de désactivation (12) pour ledit airbag du siège passager dans lequel si des conditions sont réunies pour l'occupation dudit siège passager (2, 3) par quelqu'un ou quelque chose autre qu'un adulte, ladite unité de direction (5) active une unité de signal (13) pour envoyer un signal au conducteur d'un véhicule afin de vérifier si ledit siège passager (2, 3) est occupé par quelqu'un ou quelque chose autre qu'un adulte, pour vérifier si l'airbag du siège passager doit être désactivé et pour activer ou désactiver ledit airbag du siège passager par le dispositif de désactivation (12), si nécessaire,
**caractérisé en ce que**
au moins deux capteurs sont sélectionnés dans le groupe de capteurs suivants :
interrupteur de porte (8)
interrupteur clé de contact (9)
interrupteur attache de ceinture (6, 7)
interrupteur installation siège enfant
capteur d'occupation du siège (10)
interrupteur de déconnexion de l'airbag du passager (11) et **en ce que** le minutage des signaux desdits capteurs (6, 7, 8, 9, 10, 11) est vérifié comme une condition selon laquelle le siège passager (2, 3) est occupé par quelqu'un ou quelque chose autre qu'un adulte.

2. Système d'airbag selon la revendication 1,
**caractérisé en ce que**
la séquence des signaux d'un ou de plusieurs capteurs (6, 7, 8, 9, 10, 11) est vérifié comme une condition selon laquelle le siège passager est occupé par quelqu'un ou quelque chose autre qu'un adulte.

3. Système d'airbag selon la revendication 2,
**caractérisé en ce que**
au moins deux capteurs différents (6, 7, 8, 9, 10, 11) sont connectés à ladite unité de direction (5).

4. Système d'airbag selon la revendication 3,
**caractérisé en ce que**
au moins un capteur de porte (8) et un capteur d'attache de ceinture (6, 7) sont connectés à ladite unité de direction (5).

5. Système d'airbag selon la revendication 3,
**caractérisé en ce que**
au moins un capteur de porte (8) et un capteur d'occupation de siège (10) sont connectés à l'unité de direction (5).

6. Système d'airbag selon la revendication 5,
**caractérisé en ce que**
un capteur d'attache de ceinture (6, 7) est en plus connecté à l'unité de direction (5).

7. Processus de direction pour l'activation d'une unité de signal pour envoyer un signal au conducteur d'un véhicule afin de vérifier si un siège passager (2,3) est occupé par quelqu'un ou quelque chose autre qu'un adulte et afin de vérifier si l'airbag du siège passager doit être désactivé et pour activer ou désactiver ledit airbag du siège passager par un système de désactivation (12) si nécessaire, dans lequel le processus de direction comprend les étapes de regroupement d'informations d'au moins deux capteurs (6, 7, 8, 9, 10, 11), comparant le minutage et/ou la séquence d'information avec des dispositifs préenregistrés (21, 22, 23, 24) et activant ladite unité de signal (13) si les informations correspondent au moins à l'un de ces dispositifs préenregistrés.
